# EUROPÄISCHE PATENTANMELDUNG

(11) **EP 2 666 374 A2**
(43) Veröffentlichungstag der Anmeldung: **27.11.2013**
(21) Anmeldenummer: 13168567.9
(22) Anmeldetag: 21.05.2013
(51) Int. Cl.: A24C 5/33

(54) **Filterstabsendevorrichtung und Verfahren zum Überführen von Filterstäben der Tabak verarbeitenden Industrie aus einem Magazin in eine Förderleitung**

(30) Priorität: 22.05.2012 DE 102012104406
(71) Anmelder: HAUNI Maschinenbau AG, 21033 Hamburg (DE)
(72) Erfinder: Haul, Michael, 21529 Kröppelshagen (DE); Kelm, Mathias, 21075 Hamburg (DE)
(74) Vertreter: Stork Bamberger

(57) **Zusammenfassung**

Die Erfindung betrifft eine Filterstabsendervorrichtung (10) zum Überführen von Filterstäben (12) der Tabak verarbeitenden Industrie aus einem Magazin (11) in eine Förderleitung, in Förderrichtung F der Filterstäbe (12) umfassend ein Magazin (11) zum Aufnehmen und Bevorraten der Filterstäbe (12), wobei in dem Magazin (11) Atmosphärendruck p_{Atmos} herrscht, eine Druckschleuse (13) zum Aufnehmen und Zwischenspeichern der Filterstäbe (12) mit einem Zugang (15) zum Aufbauen und Abbauen eines Druckniveaus, eine Druckkammer (16), wobei in der Druckkammer (16) ein Druck p_{DK}>p_{Atmos} herrscht und eine Sendereinheit (17) angeordnet ist, die eine rotierend antreibbare Trommel (18) mit Mulden (19) zum Aufnehmen und queraxialen Fördern der Filterstäbe (12) in den Bereich einer Ausblaszone (20) sowie einen Stauschacht (21) umfasst, der die Trommel (18) zum queraxialen Fördern der Filterstäbe (12) mit der Ausblaszone (20) verbindet, die sich dadurch auszeichnet, dass die Druckschleuse (13) sowohl eingangsseitig gegenüber dem Magazin (11) als auch ausgangsseitig gegenüber der Druckkammer (16) durch ein Dichtmittel (22) mit einer aufblasbaren Dichtung (23) abgedichtet ist, wobei die aufblasbaren Dichtungen (23) an eine Druckluftsteuerung (40) zum Verändern des Drucks innerhalb der Dichtungen (23) angeschlossen sind. Die Erfindung betrifft auch ein entsprechendes Verfahren.

## Beschreibung

Die Erfindung betrifft eine Filterstabsendervorrichtung zum Überführen von Filtern der Tabak verarbeitenden Industrie aus einem Magazin in eine Förderleitung, in Förderrichtung F der Filterstäbe umfassend ein Magazin zum Aufnehmen und Bevorraten der Filterstäbe, wobei in dem Magazin Atmosphärendruck p_{Atmos} herrscht, eine Druckschleuse zum Aufnehmen und Zwischenspeichern der Filterstäbe mit einem Zugang zum Aufbauen und Abbauen eines Druckniveaus, eine Druckkammer, wobei in der Druckkammer ein Druck p_{DK}>p_{Atmos} herrscht und eine Sendereinheit angeordnet ist, die eine rotierend antreibbare Trommel mit Mulden zum Aufnehmen und queraxialen Fördern der Filterstäbe in den Bereich einer Ausblaszone sowie einen Stauschacht umfasst, der die Trommel zum queraxialen Fördern der Filterstäbe mit der Ausblaszone verbindet.

Des Weiteren betrifft die Erfindung ein Verfahren zum Überführen von Filterstäben der Tabak verarbeitenden Industrie aus einem Magazin in eine Förderleitung mit den Schritten: Zuführen der Filterstäbe aus einem Magazin, in dem Atmosphärendruck p_{Atmos} herrscht, in eine zum Magazin hin geöffnete Druckschleuse, Schließen der Druckschleuse und Aufbauen eines Drucks p_{DS}>p_{Atmas} innerhalb der Druckschleuse, bis der Druck p_{DS} dem Druck p_{DK} einer in Förderrichtung F nachgeordneten Druckkammer entspricht, Öffnen der Druckschleuse zur Druckkammer hin und Abgeben der Filterstäbe an die Druckkammer, in der eine Sendereinheit angeordnet ist, Aufnehmen der Filterstäbe in eine mit Mulden versehene Trommel der Sendereinheit, und Rotieren der Trommel, so dass die Filterstäbe queraxial über einen Stauschacht der Sendereinheit in den Bereich einer Ausblaszone gefördert werden.

In der Tabak verarbeitenden Industrie ist es notwendig, die Filterstäbe schnell und zuverlässig über unterschiedliche Distanzen in ihrer Längserstreckung axial zu fördern. Der Sammelbegriff Filterstäbe umfasst einfache Acetat-Monofilterstäbe, Charcoal-Filterstäbe, Multisegmentfilterstäbe, Profilfilterstäbe, Kreppfilterstäbe sowie jede andere Form von Sonderfilterstäben. Zum axialen Fördern werden die Filterstäbe mittels einer Sendereinheit einer Ausblaszone zugeführt und über die Förderleitung an eine Empfängereinheit gefördert bzw. geschossen. Diese Förderleitung ist üblicherweise eine pneumatische Rohrleitung. Zum Fördern der Artikel wird Druckluft eingesetzt. Der Druck, der zum Fördern der Filterstäbe notwendig ist, kann variieren, beträgt jedoch mehr als der Atmosphärendruck, bei dem die Filterstäbe im Magazin bereitgestellt werden. Das Fördern der Filterstäbe erfolgt mit hoher Geschwindigkeit. Deshalb ist es notwendig, die Filterstäbe mit entsprechend hoher Geschwindigkeit in die Ausblaszone zu überführen. Für dieses Überführen der Filterstäbe aus einem Magazin in eine Förderleitung sind in der Tabak verarbeitenden Industrie Filterstabsendervorrichtungen und Verfahren bekannt.

In der DE 10 2010 010 075 B3 ist eine solche Filterstabsendervorrichtung mit sämtlichen Merkmalen des Oberbegriffes des Anspruches 1 beschrieben. Um die Belastung auf die Filterstäbe beim Überführen in die Förderleitung zu reduzieren und insbesondere um die Filterstäbe vollständig durch die Förderleitung bis zur Empfängereinheit zu fördern, sind einerseits hohe Drücke erforderlich. Andererseits muss dieser Senderdruck zum Senden der Filterstäbe möglichst schonend auf die Filterstäbe übertragen werden. Aus diesem Grund ist die Sendereinheit innerhalb der Druckkammer angeordnet. Da in dieser Druckkammer ein Druck p_{DK}>p_{Atmos} herrscht, ist die Druckschleuse zum Druckausgleich zwischen dem Magazin, in dem der Atmosphärendruck p_{Atmos} herrscht, und der Druckkammer mit dem Druck p_{DK} notwendig. Die Filterstäbe werden aus dem Magazin unter Atmosphärendruck p_{Atmos} in die Druckschleuse geführt. In der Druckschleuse, in der zum Zeitpunkt der Übergabe der Filterstäbe aus dem Magazin der Druck p_{DS}=p_{Atmos} herrscht, wird nach dem Befüllen der Druckschleuse der Druck p_{DS}=p_{DK}>p_{Atmos} aufgebaut. Sobald der Druck p_{DS}=p_{DK} aufgebaut ist, werden die Filterstäbe aus der Druckschleuse in die Druckkammer überführt, unter dem Druck p_{DK} in die Ausblaszone gefördert und mit dem Druck p_{DK} aus der Ausblaszone geblasen bzw. geschossen.

Für jeden Schleusengang bzw. Schleusenzyklus, mit dem als Beispielgröße ca. 100 Filterstäbe überführt werden, stehen aufgrund der hohen Sendergeschwindigkeit beispielhaft ca. 2,5s zur Verfügung. Mit anderen Worten beträgt die Zykluszeit einer Filterstabsendervorrichtung ca. 2,5s. Bei jedem Schleusenzyklus werden die Filterstäbe aus einem Bereich mit p_{Atmos} durch die Druckschleuse in einen Bereich mit p_{DK}>p_{Atmos} gefördert. In dem Bereich, in dem p_{Dk} herrscht, erfolgt dann die Vereinzelung der Filterstäbe durch die Muldentrommel und das Versenden mit einem kontinuierlichen Luftstrom. Bei diesen hohen Geschwindigkeiten der Filterstäbe einerseits und den notwendigen Drücken p_{DK}>p_{Atmos} zum Fördern der Filterstäbe andererseits besteht bei den bekannten Filterstabsendervorrichtungen das Problem der Dichtigkeit. Beim Öffnen und Schließen der Druckschleuse ist sicherzustellen, dass der Druck p_{DK} in der Druckkammer konstant bleibt. Die Abdichtung der Druckschleuse durch Axial- und/oder Radialdichtungen sowie der Übergang zwischen diesen Dichtungen haben sich bei den bekannten Filterstabsendervorrichtungen als Schwachpunkt herausgestellt. Im Bereich der Druckschleuse hat sich sowohl eingangsseitig als auch ausgangsseitig das Problem von erheblichen Leckverlusten gezeigt, so dass der Druck p_{Dk} in der Druckkammer nicht aufrechterhalten werden kann. Damit erhöht sich der Luftverbrauch, was wiederum zu erhöhten Kosten führt.

Der Erfindung liegt daher die Aufgabe zugrunde, eine konstruktiv einfache und kompakte Filterstabsendervorrichtung zu schaffen, die bei hohen Fördergeschwindigkeiten ein druckstabiles Fördern bzw. Senden der Filterstäbe ermöglicht. Die Aufgabe besteht weiterhin darin, ein entsprechendes Verfahren zu schaffen.

Diese Aufgabe wird durch eine Filtersendevorrichtung mit den eingangs genannten Merkmalen dadurch gelöst, dass die Druckschleuse sowohl eingangsseitig gegenüber dem Magazin als auch ausgangsseitig gegenüber der Druckkammer durch ein Dichtmittel mit einer aufblasbaren Dichtung abgedichtet ist, wobei die aufblasbaren Dichtungen an eine Druckluftsteuerung zum Verändern des Drucks innerhalb der Dichtungen angeschlossen sind. Mit dieser erfindungsgemäßen Lösung sind zum einen hohe Anpresskräfte und damit eine hohe Dichtwirkung erreichbar. Diese Dichtwirkung wird insbesondere auch bei den Übergängen vom Magazin in die Druckschleuse und von der Druckschleuse in die Druckkammer, bei denen aufgrund der Schleusenzyklen, nämlich dem Bewegen der Schleusenmittel, Axial- und/oder Radialbewegungen auftreten, sowie auch bei hohen Fördergeschwindigkeiten erzielt. Zum anderen ist durch Dichtmittel mit einer aufblasbaren Dichtung eine konstruktiv einfache und günstige Ausführung gewährleistet. Mit der Druckluftsteuerung ist eine individuelle Einstellung der Dichtwirkung erreichbar. Mittels der Druckluftsteuerung sind Zustände für die Dichtungen erreichbar, die den Bereich von maximaler Dichtwirkung, also absoluter Dichtigkeit, bis zur vollständigen Freigabe mit keinerlei Dichtwirkung abdecken. Diese Steuerung erleichtert auf besonders einfache Weise den Wechsel zwischen Befüllen und Entleeren der Druckschleuse, also Öffnen und Schließen der Schleusenmittel, und dem damit verbundenen Druckwechsel innerhalb der Druckschleuse. Durch die hohe Dichtwirkung, die mit der erfindungsgemäßen Lösung erreicht wird, kann der Luftverbrauch reduziert werden.

Vorteilhafterweise herrscht in jeder eine Dichtwirkung aufweisenden Dichtung ein Druck p_{D}>p_{DK}. Durch die Veränderung des Drucks innerhalb der Dichtungen kann auch deren Dichtigkeit beeinflusst werden. Als Dichtwirkung wird ein Zustand beschrieben, bei dem die Dichtung ihre eigentliche Dichtfunktion entfaltet und einen Druckausgleich zwischen der Druckschleuse einerseits und dem Magazin und/oder Druckkammer andererseits verhindert. Im Gegensatz dazu liegt keine Dichtwirkung vor, wenn die Dichtung den Durchgang zum Magazin bzw. zur Druckkammer freigibt, also einen Druckausgleich ermöglicht.

Eine besonders bevorzugte Ausführungsform der Erfindung ist dadurch gekennzeichnet, dass die Druckschleuse durch einen in einem Grundkörper gelagerten Rotationskörper ausgebildet ist, wobei der rotierend antreibbare Rotationskörper mit einer Öffnung zum Aufnehmen und Abgeben der Filterstäbe versehen ist, und das jedes Dichtmittel für den Rotationskörper als Halbschalenelement ausgebildet ist und einen Dichtschuh, einen aufblasbaren Dichtschlauch sowie eine Deckplatte umfasst, wobei das Halbschalenelement eine Öffnung zum Zuführen der Filterstäbe in den Rotationskörper bzw. zum Abfördern der Filterstäbe aus dem Rotationskörper aufweist. Ein Rotationskörper zur Bildung der Druckschleuse ist günstig und besonders kompakt. Des Weiteren ermöglicht ein solcher Rotationskörper die Aufnahme einer großen Anzahl von Filterstäben, wodurch die Leistungsfähigkeit der Filterstabsendervorrichtung erhöht wird. Mittels der Ausbildung als Halbschalenelement ist des Weiteren ein einfacher Aufbau realisiert, da nur ein Schleusenelement notwendig ist.

Zweckmäßigerweise liegt der Dichtschuh zur Bildung von Dichtflächen am Rotationskörper an und der Dichtschlauch ist zwischen der Deckplatte und dem Dichtschuh zur Bildung von Anpressflächen zwischen dem Dichtschlauch und dem Dichtschuh angeordnet, wobei die Dichtflächen des Dichtschuhs am Rotationskörper in der Größe etwa den Anpressflächen des Dichtschlauchs am Dichtschuh entsprechen. Diese Ausführungsform ermöglicht durch das Verändern der Drücke das Herstellen eines Kräftegleichgewichts.

Vorteilhafterweise ist dem Rotationskörper eine Servoantrieb zugeordnet, der einen Servomotor und einen Winkellagegeber umfasst. Damit ist ein schnelles Umschalten ermöglicht. Mittels des Winkellagegebers kann eine Winkellageposition zum Steuern des Drucks der aufblasbaren Dichtungen bereitgestellt werden, wodurch der Wechsel zwischen Befüllen und Entleeren der Druckschleuse optimiert wird.

Eine weitere besonders vorteilhafte Ausführungsform ist dadurch gekennzeichnet, dass die Druckschleuse durch zwei eine Schleusenkammer bildende Schieberelemente ausgebildet ist, wobei die in einem Grundkörper geführten Schieberelemente die Schleusenkammer gegenüber dem Magazin und der Druckkammer abgrenzen und als Dichtkörper ausgebildet Bestandteil des Dichtmittels sind, das zusätzlich einen aufblasbaren Dichtschlauch sowie ein Abstützelement umfasst. Diese ebenfalls konstruktiv sehr einfache Lösung ist zum einen günstig und schafft zum anderen eine optimale Dichtigkeit. Ein weiterer Vorteil besteht darin, dass diese Lösung besonders reibungsarm und damit materialschonend funktioniert.

Eine besonders vorteilhafte Gestaltung sieht vor, dass jedem Schieberelement ein pneumatisch angetriebener Linearantrieb zum Öffnen und Schließen der Schleusenkammer zugeordnet ist. Dadurch ist ein präzises und schnelles Öffnen und Schließen realisierbar, was kurze Schleusengänge mit einer geringen Zykluszeit ermöglich.

Vorzugsweise sind die Schieberelemente an eine Pneumatikschaltung zum unabhängigen Betätigen der Linearantriebe angeschlossen. Diese Ausbildung ermöglicht die exakte und genaue Abstimmung der Schieberstellungen zueinander. Des Weiteren erlaubt diese Ausbildung einen schnellen Druckwechsel innerhalb der Druckschleuse, was sich positiv auf die Dauer der Schleusengänge auswirkt.

In einer weiteren zweckmäßigen Weiterbildung der Erfindung sind innerhalb der Druckschleuse und/oder der Druckkammer und/oder der aufblasbaren Dichtungen Mittel zur Drucküberwachung angeordnet. Dadurch kann individuell und mit hoher Geschwindigkeit ein Druckausgleich realisiert werden. Die Mittel zur Drucküberwachung verhindern des Weiteren wirkungsvoll das Entstehen von Leckströmen.

Zweckmäßigerweise stehen die Druckluftsteuerung und/oder die Pneumatiksteuerung und/oder der Servoantrieb mit einer Steuereinrichtung in Wirkverbindung, in welche eine Positions- und/oder Lage- und/oder Zeitsteuerung zum Steuern der Druckschleuse, nämlich der Dichtungen und/oder der Schieberelemente und/oder des Rotationskörpers, implementiert ist. Dadurch wird der gesamte Schleusengang optimiert.

Die Aufgabe wird auch durch ein Verfahren mit den eingangs genannten Schritten dadurch gelöst, dass die Druckschleuse, die den Druck zwischen dem Magazin mit p_{Atmos} und der Druckkammer mit p_{DK} beim Fördern der Filterstäbe aus dem Magazin in die Druckkammer ausgleicht, durch Aufblasen von Dichtungen mit dem Druck p_{D} gegenüber dem Magazin und/oder gegenüber der Druckkammer abgedichtet wird, wobei der Druck p_{D} innerhalb der aufblasbaren Dichtungen zur Anpassung der Anpresskraft von Dichtungskörpern der Dichtmittel an ein Schleusenmittel durch eine Druckluftsteuerung verändert wird. Die sich daraus ergebenden Vorteile wurden im Wesentlichen bereits im Zusammenhang mit der Filtersendervorrichtung beschrieben, weshalb zur Vermeidung von Wiederholungen auf die entsprechenden Passagen verwiesen wird. Es ist mit diesem Verfahren eine äußerst druckstabile Förderung der Filterstäbe innerhalb der Verteilervorrichtung gewährleistet, da durch das Aufblasen der Dichtungen einerseits eine hohe Dichtwirkung und andererseits eine schnelle Freigabe der Schleusenmittel erzielt wird.

Besonders bevorzugt erfolgt das Verändern der Drücke p_{D} in den Dichtungen, das durch die Druckluftsteuerung ausgeführt wird, in Abstimmung mit der Betätigung von Schieberelementen als Schleusenmittel, die durch eine Pneumatikschaltung ausgeführt wird. Anders ausgedrückt sind die Steuerungen und Schaltungen miteinander in Wirkverbindung, so dass die Schieberelemente zum Öffnen der Druckschleuse aus den Dichtungen heraus bewegt und zum Schließen der Druckschleuse in die Dichtungen hinein bewegt werden können, und die Dichtungen erst dann zum Herstellen einer Dichtwirkung aufgeblasen werden. Die Druckluftsteuerung, also das Aufblasen oder Entspannen, der Dichtungen ist somit synchronisiert zur Bewegung der Schieberelemente. Die Höhe des Drucks p_{D} in den Dichtungen ist jedoch unabhängig von der Synchronisation und hängt wesentlich vom Druck p_{DK} in der Druckkammer ab. Anders ausgedrückt bestimmt der Druck p_{D} den Grad der Dichtigkeit des Systems.

Weitere zweckmäßige und/oder vorteilhafte Merkmale und Weiterbildungen sowie bevorzugte Verfahrensschritte ergeben sich aus den Unteransprüchen und der Beschreibung. Besonders bevorzugte Ausführungsformen sowie das Verfahrensprinzip werden anhand der beigefügten Zeichnung näher erläutert. In der Zeichnung zeigt:
- Fig. 1: eine schematische Darstellung einer Filterstabsendervorrichtung,
- Fig. 2: eine schematische Darstellung einer ersten Ausführungsform einer Druckschleuse in vergrößerter Darstellung,
- Fig. 3: eine schematische Darstellung einer weiteren Ausführungsform einer Druckschleuse in vergrößerter Darstellung,
- Fig. 4a) bis m): eine Bildfolge der Druckschleuse gemäß Figur 2 in unterschiedlichen Funktionszuständen,

- Fig. 5: eine auseinandergezogene Darstellung der Ausführungsform gemäß Figur 2,
- Fig. 6: eine auseinandergezogene Darstellung der Ausführungsform gemäß Figur 3,

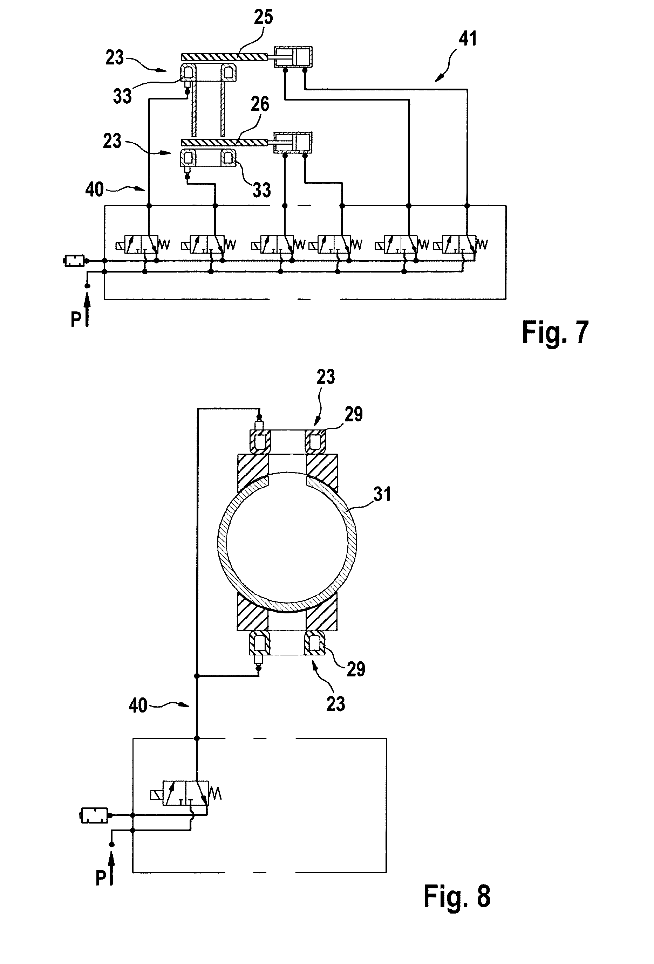

- Fig. 7: einen Pneumatikplan für die Ausführungsform gemäß Figur 2, und
- Fig. 8: einen Pneumatikplan für die Ausführungsform gemäß Figur 3.

Die in der Zeichnung dargestellte Filterstabsendervorrichtung dient zum Überführen von Filterstäben der Tabak verarbeitenden Industrie aus einem Magazin in eine Förderleitung, um die Filterstäbe über eine Distanz von einem Sendemodul an ein Empfangsmodul zu schießen. Insbesondere ist die Filterstabsendervorrichtung auch zum Überführen von Multisegment-, Kammer-, Charcoal-, Profil- und anderen Sonderfilterstäben sowie anderen stabförmigen Artikeln der Tabak verarbeitenden Industrie ausgebildet und eingerichtet.

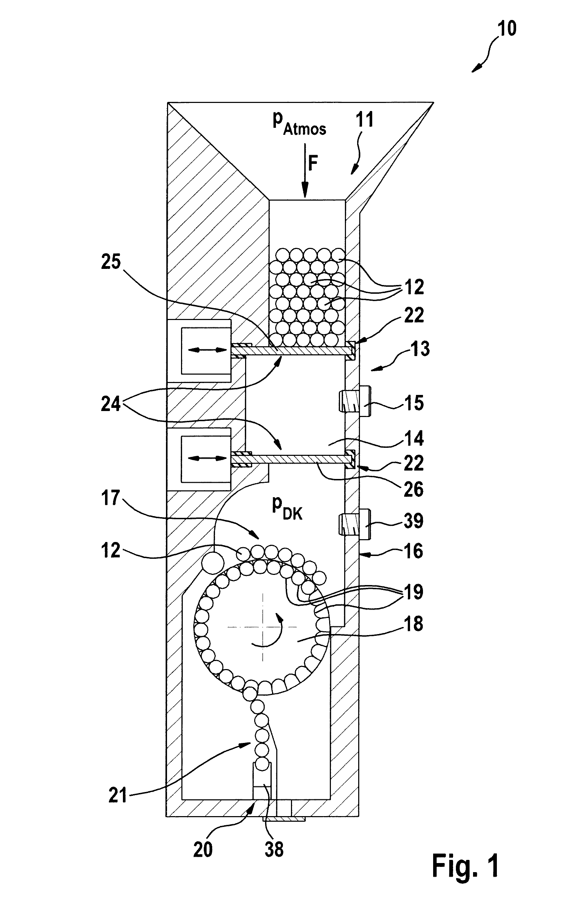

In der Figur 1 ist sehr schematisch eine Filterstabsendervorrichtung 10 dargestellt. Die Filterstabsendervorrichtung 10 umfasst ein Magazin 11 zum Aufnehmen und Bevorraten von Filterstäben 12. In dem Magazin 11 herrscht der Umgebungs- bzw. Atmosphärendruck p_{Atmos}. Ausgehend von diesem Magazin 11 umfasst die Filterstabsendervorrichtung 10 in Förderrichtung F der Filterstäbe 12 weiterhin eine Druckschleuse 13 zum Aufnehmen und Zwischenspeichern der Filterstäbe 12. Diese Druckschleuse 13 weist eine Schleusenkammer 14 auf, die über einen Zugang 15 zum Aufbauen und Abbauen eines gegenüber der Umgebung abweichenden Druckniveaus mit dem Druck p_{DS} innerhalb der Schleusenkammer 14 verfügt. Die Druckschleuse 13 ist durch Schleusenmittel 24 gegenüber der Umgebung mit dem Atmosphärendruck p_{Atmos} abschirmbar. Die Filterstabsendervorrichtung 10 weist des Weiteren eine Druckkammer 16 auf, in der - im Betrieb der Filterstabsendervorrichtung 10 - ein Druck p_{DK}>p_{Atmos} herrscht. Innerhalb der Druckkammer 16 ist eine Sendereinheit 17 angeordnet, die eine rotierend antreibbare Trommel 18 mit Mulden 19 zum Aufnehmen und queraxialen Fördern der Filterstäbe 12 in den Bereich einer Ausblaszone 20 sowie einen Stauschacht 21 umfasst. Der Stauschacht 21 verbindet die Trommel 18 zum queraxialen Fördern der Filterstäbe 12 mit der Ausblaszone 20.

Solche Filtersendervorrichtungen 10 sind z.B. aus der Patentschrift DE 10 2010 010 075 B3 bekannt, weshalb auf eine detailliertere Beschreibung an dieser Stelle verzichtet wird. Die in der Figur 1 dargestellte Filterstabsendervorrichtung 10 umfasst weitere Komponenten, die rein optional sind und weiter unten beschrieben werden.

Erfindungsgemäß ist die Druckschleuse 13 sowohl eingangsseitig gegenüber dem Magazin 11 als auch ausgangsseitig gegenüber der Druckkammer 16 durch ein Dichtmittel 22 mit einer aufblasbaren Dichtung 23 abgedichtet, wobei die aufblasbaren Dichtungen 23 an eine Druckluftsteuerung 40 zum Verändern des Drucks innerhalb der Dichtungen 23 angeschlossen. Das bedeutet, dass die Schleusenkammer 14 gegenüber der Umgebung mit Atmosphärendruck p_{Atmos} in dem Bereich, in dem die Filterstäbe 12 aus dem Magazin 11 in die Druckschleuse 13 strömen, und in dem Bereich, in dem die Filterstäbe 12 aus der Druckschleuse 13 in die Druckkammer 16 strömen, je nach Stellung bzw. Position der Schleusenmittel 24 vollständig abgedichtet ist. Einerseits kann es erforderlich sein, die Dichtungen 23 zur Erreichung einer Dichtwirkung mit einem konstanten Druck p_{D} zu beaufschlagen. Anderseits kann die Notwendigkeit bestehen, den Druck p_{D} in den Dichtungen 23 zu variieren, um einerseits eine Dichtwirkung zu erzielen und andererseits die Dichtwirkung gezielt aufzuheben, beispielsweise zum Betätigen der Druckschleuse 13. Durch die Druckluftsteuerung 40 kann der Druck p_{D} in den Dichtungen auch an einen veränderten Druck p_{DK} innerhalb der Druckkammer 16 angepasst werden. Es ist auch zu bedenken, dass durch die aufblasbaren Dichtungen 23 eine Anpresskraft auf die Schleusenmittel 24 erzeugt wird, wobei die Anpresskraft unter Umständen zum Betätigen der Schleusenmittel 24 reduziert werden muss.

Die im Folgenden beschriebenen Merkmale und Weiterbildungen stellen für sich betrachtet oder in Kombination miteinander bevorzugte Ausführungsformen der Erfindung dar.

Vorzugsweise herrscht in jeder eine Dichtwirkung aufweisenden Dichtung 23 ein Druck p_{D}>p_{DK}, also in allen Dichtungen 23, die zur Erzeugung einer Dichtwirkung aufgeblasen sind. Der Druck p_{D} in den Dichtungen 23 kann auch gleich p_{DK} oder geringfügiger kleiner sein. Dichtungen 23, die keine Dichtwirkung erzielen sollen, beispielsweise in dem Fall, dass sie die Schleusenmittel 24 freigeben, weisen vorzugsweise einen Druck p_{D}<<p_{DK} auf.

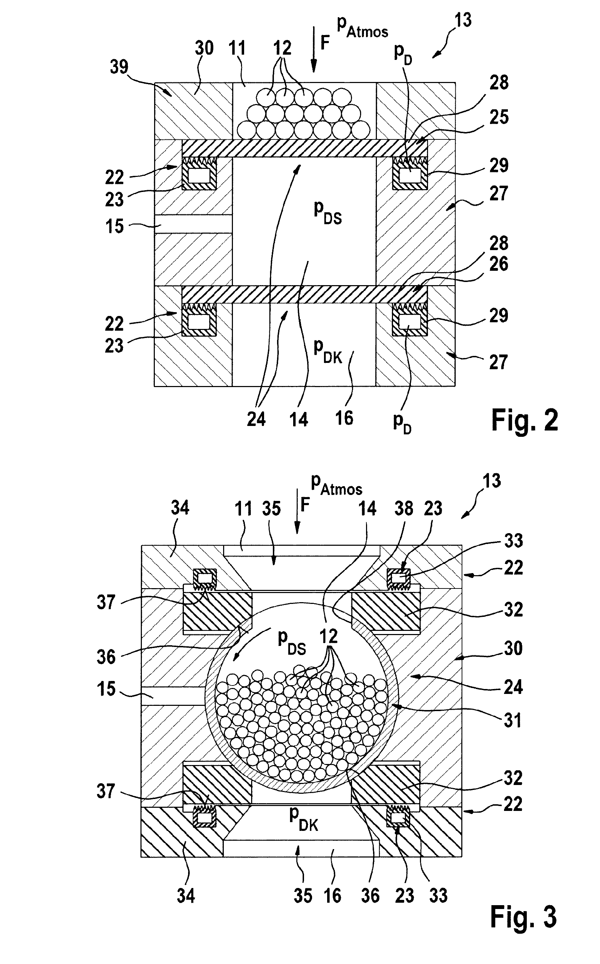

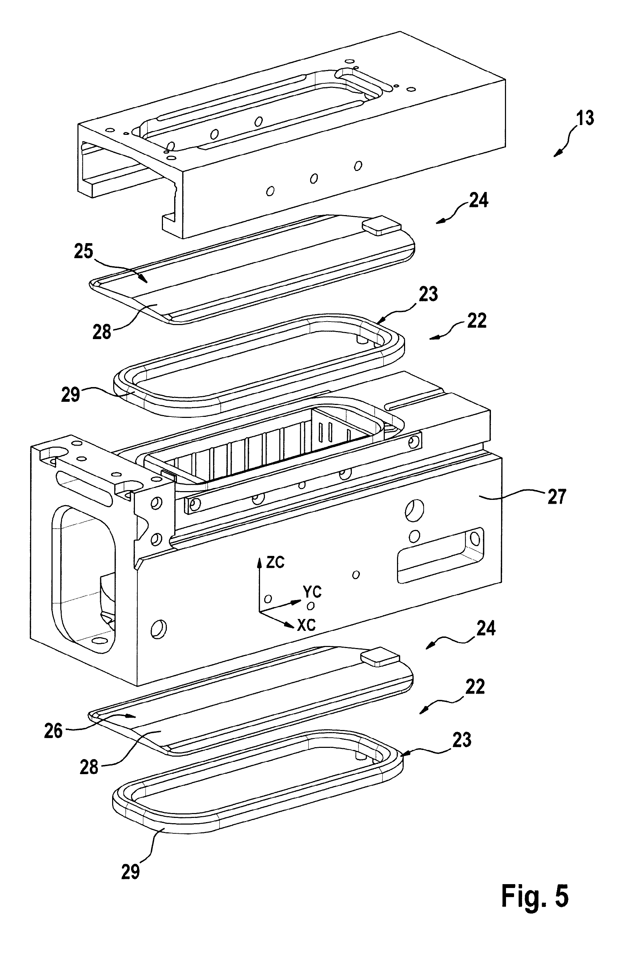

In den Figuren 2 und 5 wird eine erste Ausführungsform der Druckschleuse 13 in vergrößerter Darstellung gezeigt. Diese Druckschleuse 13 ist durch zwei die Schleusenkammer 14 bildende bzw. begrenzende Schieberelemente 25, 26 ausgebildet. Die Schieberelemente 25, 26, die auch als Schwerter bezeichnet werden, bilden damit das Schleusenmittel 24 und sind in einem Grundkörper 27 linear geführt. Es kann einen gemeinsamen Grundkörper 27 geben. Es besteht aber auch die Möglichkeit, mehrere Grundkörper 27 vorzusehen. Ein Schieberelement 25 grenzt die Schleusenkammer 14 gegenüber dem Magazin 11 ab, während das andere Schieberelement 26 die Schleusenkammer 14 gegenüber der Druckkammer 16 abgrenzt. In der gezeigten Ausführungsform bilden die Schieberelement 25, 26 gleichzeitig einen Dichtungskörper 28. Dieser Dichtungskörper 28 ist Bestandteil des Dichtmittels 22, das zusätzlich einen aufblasbaren Dichtschlauch 29 umfasst. Optional können die Schieberelemente 25, 26 und die Dichtungskörper 28 auch als separate Einzelteile ausgebildet sein.

In mindestens einem der Grundkörper 27 ist der Zugang 15 für das Zuführen (Belüften) oder Ablassen (Entlüften) von Druckluft mittels geeigneter Ventilelemente oder dergleichen ausgebildet. Der Dichtschlauch 29 ist in den Grundkörper 27 eingebettet und liegt an den Schieberelementen 25, 26 an. Als Gegenlager bzw. Abstützelement 39 für die Schieberelemente 25, 26, die der Anpresskraft der Dichtschläuche 29 ausgesetzt sind, können zusätzliche Deckplatten, die Grundkörper 27 selbst oder andere Stützkörper vorgesehen sein. Zum Öffnen und Schließen der Schleusenkammer 14 durch Betätigung der Schieberelemente 25, 26 sind bevorzugt pneumatisch angetriebene Linearantriebe vorgesehen. Mittels der Linearantriebe sind die Schieberelemente 25, 26 entlang ihrer Führungen bewegbar. Die Linearantriebe sind individuell ansteuerbar. Bevorzugt sind die Schieberelemente 25, 26 an eine Pneumatikschaltung 41 zum unabhängigen Betätigen der Linearantriebe angeschlossen, so dass die Schieberelemente 25, 26 im Wechsel gesteuert werden können. Mittels der Linearantriebe sind die Schieberelemente 25, 26 zum Schließen der Schleusenkammer 14 quasi in die aufblasbaren Dichtungen 23 fahrbar und zum Öffnen der Schleusenkammer 14 aus diesen zurück bewegbar. Bevorzugt besteht zwischen den Dichtungen 23 einerseits und den Schieberelementen 25, 26 andererseits zum Zeitpunkt der Schieberelementebewegung kein Kontakt. Dazu sind die Dichtungen 23 vor dem Bewegen der Schieberelemente 25, 26 zu entspannen bzw. entlüften.

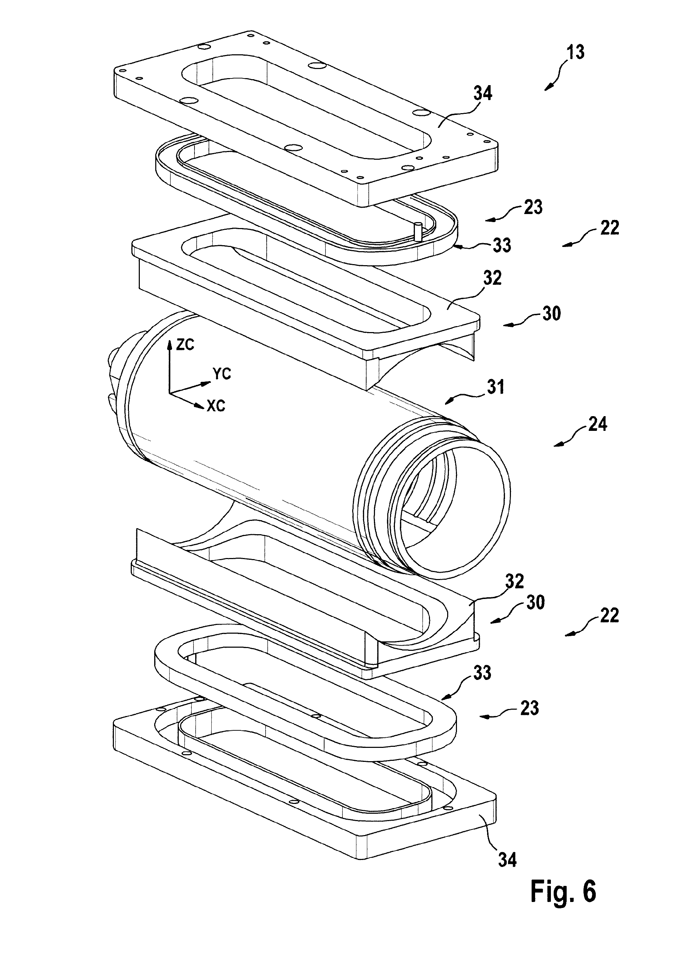

In den Figuren 3 und 6 ist eine weitere Ausführungsform einer Druckschleuse 13 dargestellt. Die Druckschleuse 13 ist durch einen in einem Grundkörper 30 gelagerten Rotationskörper 31 als Schleusenmittel 24 ausgebildet. Dieser Rotationskörper 31 ist mittels eines nicht dargestellten Servoantriebs, der einen Servomotor und einen Winkellagegeber umfasst, rotierend antreibbar. Der Drehwinkel kann variieren und z.B. 180° oder 360° betragen. Der Rotationskörper 31 ist mit einer Öffnung 38 zum Aufnehmen und Abgeben der Filterstäbe 12 versehen. Der Rotationskörper 31 ist vorzugsweise mit zwei Dichtmitteln 22 versehen. Jedes Dichtmittel 22 ist als Halbschalenelement ausgebildet und umfasst einen Dichtschuh 32 als Dichtungskörper, einen aufblasbaren Dichtschlauch 33 sowie eine Deckplatte 34. Das zuvor beschriebene Halbschalenelement weist eine Öffnung 35 zum Zuführen der Filterstäbe 12 in eine Kammer des Rotationskörpers 31 bzw. zum Abfördern der Filterstäbe 12 aus der Kammer des Rotationskörpers 31 auf. Diese Öffnung 35 kann beispielsweise dadurch gebildet sein, dass Dichtschuh 32, Dichtschlauch 33 und Deckplatte 34 eine Ringform aufweisen. In nicht dargestellten Ausführungsformen kann der Rotationskörper 31 auch mehrere Kammern aufweisen.

Der Dichtschuh 32 liegt zur Bildung von Dichtflächen 36 am Rotationskörper 31 an. Dazu ist der Dichtschuh 32 innenseitig an die Kontur des Rotationskörpers 31 angepasst. Der Dichtschlauch 33 liegt sandwichartig zwischen dem Dichtschuh 32 und der Deckplatte 34, so dass zwischen dem Dichtschlauch 33 und dem Dichtschuh 32 Anpressflächen 37 ausgebildet sind. Vorzugsweise entsprechen die Dichtflächen 36 des Dichtschuhs 32 am Rotationskörper 31 in der Größe etwa den Anpressflächen 37 des Dichtschlauchs 33 am Dichtschuh 32. Zum einen können die Größen von Dichtflächen 36 und Anpressflächen 37 zueinander auch variieren. Zum anderen besteht selbstverständlich die Möglichkeit, den Rotationskörper 31 in anderer Weise auszugestalten und zu lagern. Beispielsweise können die Komponenten des Halbschalenelementes in einer anderen als der dargestellten Weise zusammengestellt sein. In der Figur 3 ist der Dichtschlauch 33 in die Deckplatte 34 eingelassen. Der Dichtschlauch 33 könnte aber auch in den Dichtschuh 32 eingelassen sein. Entscheidend ist, dass der Rotationskörper 31 zu beiden Seiten, also zum Magazin 11 sowie zur Druckkammer 16 hin durch eine aufblasbare Dichtung 23 abgedichtet ist.

Die Filterstabsendervorrichtung 10 kann mindestens ein Mittel zur Drucküberwachung aufweisen. Bevorzugt sind jedoch innerhalb der Druckschleuse 13 und/oder der Druckkammer 16 und/oder der aufblasbaren Dichtungen 23 Mittel zur Drucküberwachung angeordnet bzw. angeschlossen. Diese Mittel sind vorzugsweise an eine übergeordnete Steuereinrichtung angeschlossen, die auch mit dem Servoantrieb des Rotationskörpers 31 und/oder der Pneumatikschaltung 41 für die Schieberelemente 25, 26 und/oder der Druckluftsteuerung 40 der Dichtungen 23 in Wirkverbindung steht. Bevorzugt ist der Steuereinrichtung eine Positions- und/oder Lage- und/oder Zeitsteuerung zum Steuern der Druckschleuse 13, nämlich der Dichtungen 23 und/oder der Schieberelemente 25, 26 und/oder des Rotationskörpers 31, implementiert.

Weiter oben wurden bereits mit Bezug auf die Figur 1 die Grundkomponenten der Filterstabsendervorrichtung 10 beschrieben. Die allseitig dicht abgeschlossene Druckkammer 16 bildet einen druckdichten Aufnahmeraum für die Sendereinheit 17 und die Filterstäbe 12. Die über einen Zugang 38 in die Druckkammer 16 eingeleitete Druckluft dient nicht nur als Transportluft sondern auch als Schussluft. Zusätzlich kann die Druckkammer 16 einen weiteren Zugang 39 aufweisen, der bevorzugt in Förderrichtung F der Filterstäbe 12 vor der Trommel 18 in die Druckkammer 16 mündet. Die Befüllung der Druckschleuse 13 mit Druckluft über den Zugang 15 dient insbesondere dazu, dass der Druck p_{DK} in der Druckkammer 16 konstant ist und bleibt.

Wie zuvor beschrieben ist die Druckschleuse 13 mittels aufblasbarer Dichtungen 23 gegenüber dem Magazin 11 und der Druckkammer 16 abdichtbar. Entsprechend aufblasbare Dichtungen können aber ebenfalls im Bereich einer Tür der Filterstabsendervorrichtung 10, die den Zugriff in den Entnahmebereich ermöglicht, und/oder im Bereich des Dichtschuhs 32 angeordnet sein. Dies hat den Vorteil, dass sowohl die Tür als auch der Dichtschuh 32 zunächst kraftfrei betätigbar sind. Die aufblasbaren Dichtungen können dann erst nach der Verrieglung aufgeblasen werden.

Im Folgenden wird das Verfahrensprinzip anhand der Zeichnung näher erläutert:
Mit einer Filterstabsendervorrichtung 10, insbesondere einer Filterstabsendervorrichtung 10, wie sie zuvor beschrieben wurde, werden Filterstäbe 12 aus einem Magazin 11 in eine Förderleitung überführt, indem die Filterstäbe 12 aus dem Magazin 11, in dem Atmosphärendruck p_{Atmos} herrscht, in die zum Magazin 11 hin geöffnete Druckschleuse 13 gefördert werden, in der dann ebenfalls p_{Atmos} herrscht. Die Druckschleuse 13 wird dann vollständig geschlossen, um über den Zugang 15 einen Druck p_{DS} innerhalb der Druckschleuse 13 aufzubauen, der dem Druck p_{DK} in der in Förderrichtung F der Druckschleuse 13 folgenden Druckkammer 16 entspricht und größer als p_{Atmos} ist. Sobald der Druck p_{DS}=p_{DK}, wird die Druckschleuse 13 zur Druckkammer 16 hin geöffnet. Die Filterstäbe 12 werden an die Druckkammer 16 abgegeben. Innerhalb der Druckkammer 16 werden die Filterstäbe 12 vereinzelt in Mulden 19 der Trommel 18 aufgenommen und durch Rotation der Trommel 18 queraxial über einen Stauschacht 21 in den Bereich einer Ausblaszone 20 gefördert. Die Druckschleuse 13, die den Druck zwischen dem Magazin 11 mit p_{Atmos} und der Druckkammer 16 mit p_{DK} beim Fördern der Filterstäbe 12 aus dem Magazin 11 in die Druckkammer 16 ausgleicht, wird durch Aufblasen von Dichtungen 23 mit dem Druck p_{D} gegenüber dem Magazin 11 und/oder der Druckkammer 16 abgedichtet. Zwischen dem Magazin 11 und der Druckkammer 16 herrscht permanent ein Druckunterschied, da p_{DK}>p_{Atmos}. Da die Druckschleuse 13 die Filterstäbe 12 bei p_{Atmos} aufnimmt und bei p_{DK} abgibt, ändert sich der Druck p_{DS} in der Druckschleuse 13 zyklisch, wobei das Schleusenmittel 24 der Druckschleuse 13 auch noch zum Öffnen und Schließen der Schleusenkammer 14 zyklisch bewegt wird. Dadurch, dass die Dichtungen 23 aufgeblasen werden, kann trotz der kurzen Zykluszeiten eine optimale Dichtigkeit erreicht werden. Zum Betätigen der Druckschleuse 13 können die Dichtungen 23 entspannt werden. Anders ausgedrückt werden die aufblasbaren Dichtungen 23 mittels der Druckluftsteuerung 40 vor dem Bewegen der Druckluftschleuse 13 entspannt, um die Bewegung möglichst reibungs- und verschleißarm oder sogar reibungs- und verschleißfrei zu gestalten.

Bevorzugt wird der Druck p_{D} innerhalb der aufblasbaren Dichtungen 23 zur Anpassung der Anpresskraft von Dichtungskörpern der Dichtmittel 22 an ein Schleusenmittel 24 durch eine Druckluftsteuerung 40 verändert. Die Höhe des Drucks p_{D} innerhalb der Dichtungen 23 bestimmt die Höhe der Anpresskraft, wodurch die Dichtwirkung beeinflusst wird. Je niedriger der Druck p_{D}, desto höher die Leckverluste. Je höher der Druck p_{D}, desto geringer die Leckverluste.

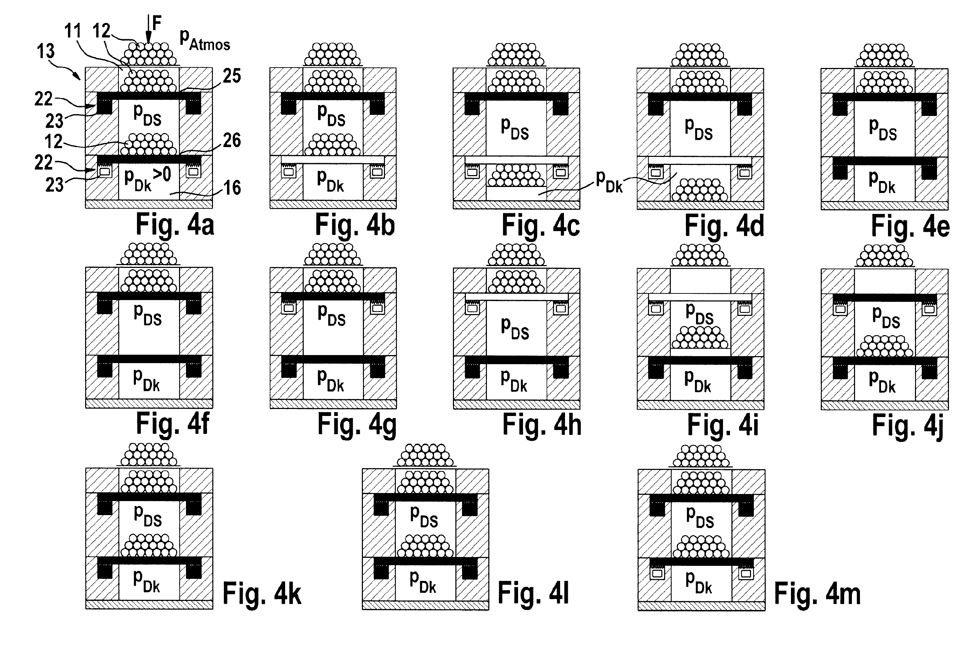

Optional erfolgt das Verändern der Drücke p_{D} in den Dichtungen 23, das durch die Druckluftsteuerung 40 ausgeführt wird, in Abstimmung mit der Betätigung von Schieberelementen 25, 26 als Schleusenmittel 24, die durch eine Pneumatikschaltung 41 ausgeführt wird. Diese Abhängigkeit der Steuerung der Druckluft in den Dichtungen 23 einerseits und der Betätigung der Schieberelemente 25, 26 andererseits ermöglicht den Druckausgleich insbesondere bei einer Druckschleuse 13, die nach dem Schleusenprinzip funktioniert, wie es im Folgenden in der Figurenfolge 4 a) bis m) dargestellt ist. Der besseren Übersicht halber wurden die Bezugsziffern nur in der Figur 4 a) vergeben.

In der Figur 4 a) ist die Druckschleuse 13 in der Warteposition dargestellt. Sowohl im Magazin 11, in dem stets der Atmosphärendruck p_{Atmos} herrscht, als auch in der Druckschleuse 13 befinden sich Filterstäbe 12. Das obere Schieberelement 25, auf dem ebenfalls Filterstäbe 12 liegen, als Dichtungskörper des Dichtmittels 22 befindet sich in Schfießstellung (Schieberelement schwarz dargestellt) mit aufgeblasener Dichtung 23 zur Herstellung einer Dichtwirkung (Dichtung ist schwarz dargestellt). Das untere Schieberelement 26 des Dichtmittels 22 befindet sich ebenfalls in Schließstellung, allerdings mit entspannter (also nicht aufgeblasener) Dichtung 23 mit geringer bzw. ohne Dichtwirkung (Dichtung ist weiß dargestellt). In der Druckschleuse 13 herrscht der Druck p_{DS}. In der Druckkammer 16 herrscht der Druck p_{DK}. Der Druck p_{DS} wird solange erhöht, bis er dem Druck p_{DK} entspricht. Anders ausgedrückt wird die Druckschleuse 13 belüftet. Dann wird das untere Schieberelement 26 geöffnet (siehe Figur 4 b), Schieberelement weiß dargestellt), so dass die Filterstäbe 12 in die Druckkammer 16 fallen (siehe Figur 4 c)). Wenn die Druckschleuse 13 leer ist, wird das untere Schieberelement 26 wieder geschlossen (Figur 4 d)) und die Dichtung 23 wird wieder aufgeblasen (Figur 4 e)). Anschließend wird die Druckschleuse 13 entlüftet. Mit anderen Worten wird der Druck p_{DS} wieder reduziert auf den Druck p_{Atmos} (Figur 4 f)). Im Folgenden wird die obere Dichtung 23 entspannt (Figur 4 g)), um das Öffnen des oberen Schieberelementes 25 zu ermöglichen (Figur 4 h)). Die wiederum auf dem oberen Schieberelement 25 liegenden Filterstäbe 12 fallen in die Druckschleuse 13 (Figur 4 i)). Anschließend wird das obere Schieberelement 25 wieder geschlossen (Figur 4 j)) und die obere Dichtung 23 wird erneut aufgeblasen, wobei dann neue Filterstäbe 12 auf das obere Schieberelement 25 fallen (Figur 4 k)). Dann wird die Druckschleuse 13 belüftet, also mit Druckluft versehen, bis der Druck p_{DS} wieder gleich p_{DK} ist. Sobald der Druckausgleich zwischen der Druckschleuse 13 und der Druckkammer 16 hergestellt ist, wird die untere Dichtung 23 entspannt, um das untere Schieberelement 26 zum Entleeren der Druckschleuse 13 zu ermöglichen. Dann beginnt der Zyklus von Neuem. Zur Optimierung der Schleusengänge bzw. Schleusenzyklen kann es hilfreich sein, die Drücke p_{DS} und/oder p_{DK} und/oder p_{D} zu überwachen.

Bei der Ausführungsform der Druckschleuse 13 mit einem Rotationskörper 31 herrscht in den Dichtschläuchen 33 während des Schleusenzyklus ein vorzugsweise konstanter Druck p_{D}, der stets größer als der Druck p_{DK} in der Druckkammer 16 ist. Der Rotationskörper 31 steht zum Befüllen der Schleusenkammer 14 mit seiner Öffnung 38 in Überdeckung mit der Öffnung 35 des Dichtmittels 22, so dass die Filterstäbe 12 aus dem Magazin 11 in den Schleusenraum 14 strömen. Sobald der Schleusenraum 14 gefüllt ist, wird der Rotationskörper 31 soweit gedreht, im Beispiel um etwa 90°, bis die Öffnung 38 in Überdeckung mit dem Zugang 15 ist. Dann wird der Druck p_{DS} so weit erhöht, bis er dem Druck p_{DK} in der Druckkammer 16 entspricht. Anschließend wird der Rotationskörper 31 weiter gedreht, bis die Filterstäbe 12 aus der Öffnung 38 durch die Öffnung 35 in den Druckraum 16 fallen, wo sie durch die Trommel 18 aufgenommen und vereinzelt zur Ausblaszone 20 gefördert werden. Wenn die Schleusenkammer 14 ganz leer ist, wird der Rotationskörper 31 entweder zurück oder einfach weiter gedreht. Der Druckausgleich, um wieder den Atmosphärendruck P_{Atmos} in der Druckschleuse 13 zu erreichen, kann über den Zugang 15 oder direkt über die Öffnung 35 erfolgen. Dann beginnt ein neuer Schleusenzyklus. Die Druckluft für die Dichtschläuche 33 kann ebenfalls variieren, um z.B. bei der Drehung des Rotationskörpers 31 eine Entlastung herbeizuführen.

## Patentansprüche

1. Filterstabsendervorrichtung (10) zum Überführen von Filterstäben (12) der Tabak verarbeitenden Industrie aus einem Magazin (11) in eine Förderleitung, in Förderrichtung F der Filterstäbe (12) umfassend ein Magazin (11) zum Aufnehmen und Bevorraten der Filterstäbe (12), wobei in dem Magazin (11) Atmosphärendruck p_{Atmos} herrscht, eine Druckschleuse (13) zum Aufnehmen und Zwischenspeichern der Filterstäbe (12) mit einem Zugang (15) zum Aufbauen und Abbauen eines Druckniveaus, eine Druckkammer (16), wobei in der Druckkammer (16) ein Druck p_{DK}>p_{Atmos} herrscht und eine Sendereinheit (17) angeordnet ist, die eine rotierend antreibbare Trommel (18) mit Mulden (19) zum Aufnehmen und queraxialen Fördern der Filterstäbe (12) in den Bereich einer Ausblaszone (20) sowie einen Stauschacht (21) umfasst, der die Trommel (18) zum queraxialen Fördern der Filterstäbe (12) mit der Ausblaszone (20) verbindet, **dadurch gekennzeichnet, dass** die Druckschleuse (13) sowohl eingangsseitig gegenüber dem Magazin (11) als auch ausgangsseitig gegenüber der Druckkammer (16) durch ein Dichtmittel (22) mit einer aufblasbaren Dichtung (23) abgedichtet ist, wobei die aufblasbaren Dichtungen (23) an eine Druckluftsteuerung (40) zum Verändern des Drucks innerhalb der Dichtungen (23) angeschlossen sind.

2. Filterstabsendervorrichtung nach Anspruch 1, **dadurch gekennzeichnet, dass** in jeder eine Dichtwirkung aufweisenden Dichtung (23) ein Druck p_{D}>p_{DK} herrscht.

3. Filtersendervorrichtung nach Anspruch 1 oder 2, **dadurch gekennzeichnet, dass** die Druckschleuse (13) durch einen in einem Grundkörper (30) gelagerten Rotationskörper (31) ausgebildet ist, wobei der rotierend antreibbare Rotationskörper (31) mit einer Öffnung (38) zum Aufnehmen und Abgeben der Filterstäbe (12) versehen ist, und das jedes Dichtmittel (22) für den Rotationskörper (31) als Halbschalenelement ausgebildet ist und einen Dichtschuh (32), einen aufblasbaren Dichtschlauch (33) sowie eine Deckplatte (34) umfasst, wobei das Halbschalenelement eine Öffnung (35) zum Zuführen der Filterstäbe (12) in den Rotationskörper (31) bzw. zum Abfördern der Filterstäbe (12) aus dem Rotationskörper (31) aufweist.

4. Filterstabsendervorrichtung nach Anspruch 3, **dadurch gekennzeichnet, dass** der Dichtschuh (32) zur Bildung von Dichtflächen (36) am Rotationskörper (31) anliegt und der Dichtschlauch (33) zwischen der Deckplatte (34) und dem Dichtschuh (32) zur Bildung von Anpressflächen (37) zwischen dem Dichtschlauch (33) und dem Dichtschuh (32) angeordnet ist, wobei die Dichtflächen (36) des Dichtschuhs (32) am Rotationskörper (31) in der Größe etwa den Anpressflächen (37) des Dichtschlauchs (33) am Dichtschuh (32) entsprechen.

5. Filterstabsendervorrichtung nach Anspruch 3 oder 4, **dadurch gekennzeichnet, dass** dem Rotationskörper (31) ein Servoantrieb zugeordnet ist, der einen Servomotor und einen Winkellagegeber umfasst.

6. Filterstabsendervorrichtung nach Anspruch 1 oder 2, **dadurch gekennzeichnet, dass** die Druckschleuse (13) durch zwei eine Schleusenkammer (14) bildende Schieberelemente (25, 26) ausgebildet ist, wobei die in einem Grundkörper (27) geführten Schieberelemente (25, 26) die Schleusenkammer (14) gegenüber dem Magazin (11) und der Druckkammer (16) abgrenzen und als Dichtungskörper (28) ausgebildet Bestandteil des Dichtmittels (22) sind, das zusätzlich einen aufblasbaren Dichtschlauch (29) sowie ein Abstützelement (39) umfasst.

7. Filterstabsendervorrichtung nach Anspruch 6, **dadurch gekennzeichnet, dass** jedem Schieberelement (25, 26) ein pneumatisch angetriebener Linearantrieb zum Öffnen und Schließen der Schleusenkammer (14) zugeordnet ist.

8. Filterstabsendervorrichtung nach Anspruch 6 oder 7, **dadurch gekennzeichnet, dass** die Schieberelemente (25, 26) an eine Pneumatikschaltung (41) zum unabhängigen Betätigen der Linearantriebe angeschlossen sind.

9. Filterstabsendervorrichtung nach einem der Ansprüche 1 bis 8, **dadurch gekennzeichnet, dass** innerhalb der Druckschleuse (13) und/oder der Druckkammer (16) und/oder der aufblasbaren Dichtungen (23) Mittel zur Drucküberwachung angeordnet sind.

10. Filterstabsendervorrichtung nach einem der Ansprüche 1 bis 9, **dadurch gekennzeichnet, dass** die Druckluftsteuerung (40) und/oder die Pneumatiksteuerung (41) und/oder der Servoantrieb mit einer Steuereinrichtung in Wirkverbindung stehen, in welche eine Positions-und/oder Lage- und/oder Zeitsteuerung zum Steuern der Druckschleuse (13), nämlich der Dichtungen (23) und/oder der Schieberelemente (25, 26) und/oder des Rotationskörpers (31), implementiert ist.

11. Verfahren zum Überführen von Filterstäben (12) der Tabak verarbeitenden Industrie aus einem Magazin (11) in eine Förderleitung mit den Schritten:
- Zuführen der Filterstäbe (12) aus einem Magazin (11), in dem Atmosphärendruck p_{Atmos} herrscht, in eine zum Magazin (11) hin geöffnete Druckschleuse (13),
- Schließen der Druckschleuse (13) und Aufbauen eines Drucks p_{DS}>p_{Atmos} innerhalb der Druckschleuse (13), bis der Druck p_{DS} dem Druck p_{DK} einer in Förderrichtung F nachgeordneten Druckkammer (16) entspricht,
- Öffnen der Druckschleuse (13) zur Druckkammer (16) hin und Abgeben der Filterstäbe (12) an die Druckkammer (16), in der eine Sendereinheit (17) angeordnet ist,
- Aufnehmen der Filterstäbe (12) in eine mit Mulden (19) versehene Trommel (18) der Sendereinheit (17), und
- Rotieren der Trommel (18), so dass die Filterstäbe (12) queraxial über einen Stauschacht (21) der Sendereinheit (17) in den Bereich einer Ausblaszone (20) gefördert werden,
**dadurch gekennzeichnet, dass** die Druckschleuse (13), die den Druck zwischen dem Magazin (11) mit p_{Atmos} und der Druckkammer (16) mit p_{DK} beim Fördern der Filterstäbe (12) aus dem Magazin (11) in die Druckkammer (16) ausgleicht, durch Aufblasen von Dichtungen (23) mit dem Druck p_{D} gegenüber dem Magazin (11) und/oder gegenüber der Druckkammer (16) abgedichtet wird, wobei der Druck p_{D} innerhalb der aufblasbaren Dichtungen (23) zur Anpassung der Anpresskraft von Dichtungskörpern der Dichtmittel (22) an ein Schleusenmittel (24) durch eine Druckluftsteuerung (40) verändert wird.

12. Verfahren nach Anspruch 11, **dadurch gekennzeichnet, dass** das Verändern der Drücke p_{D} in den Dichtungen (23), das durch die Druckluftsteuerung (40) ausgeführt wird, in Abstimmung mit der Betätigung von Schieberelementen (25, 26) als Schleusenmittel (24), die durch eine Pneumatikschaltung (41) ausgeführt wird, erfolgt.

13. Verfahren nach Anspruch 11 oder 12, **dadurch gekennzeichnet, dass** die Drücke p_{DS} in der Druckschleuse (13), p_{DK} in der Druckkammer (16) und p_{D} in den Dichtungen (23) überwacht werden.
